(19) Europäisches Patentamt
European Patent Office
Office européen des brevets

(11) Publication number : 0 412 538 B1

# (12) EUROPEAN PATENT SPECIFICATION

(45) Date of publication of patent specification :
02.02.94 Bulletin 94/05

(51) Int. Cl.$^5$ : **A01N 3/00**, A01N 27/00

(21) Application number : 90115286.8

(22) Date of filing : 09.08.90

## (54) Foliar glazing agent.

The file contains technical information submitted after the application was filed and not included in this specification

(30) Priority : 11.08.89 JP 208519/89

(43) Date of publication of application :
13.02.91 Bulletin 91/07

(45) Publication of the grant of the patent :
02.02.94 Bulletin 94/05

(84) Designated Contracting States :
AT BE CH DE DK ES FR GB GR IT LI LU NL SE

(56) References cited :
DE-A- 1 644 727
FR-A- 1 602 937
US-A- 4 348 424

(73) Proprietor : TAKEDA GARDEN PRODUCTS CO., LTD.
1-7, Nihonbashihoncho 2-chome, Chuo-ku
Tokyo 103 (JP)
Proprietor : TAIHO INDUSTRIES Co., LTD.
21-44 Takanowa 2-chome
Minato-ku, Tokyo108 (JP)

(72) Inventor : Obayashi, Hisashi
1435, Aza-kamitoyoura, Azuchi-cho
Gamou-gun, Shiga 521-13 (JP)
Inventor : Shinohara, Seigo
7-302, 1-1, Tsutsumi
Chigasaki, Kanagawa 253 (JP)
Inventor : Takahata, Hiroyuki
32, Aza-kouda 1-chome
Tondabayashi, Osaka 584 (JP)
Inventor : Kijima, Tetsuo
2445, Oyama-machi
Machida, Tokyo 194-02 (JP)

(74) Representative : von Kreisler, Alek, Dipl.-Chem. et al
Patentanwälte von Kreisler-Selting-Werner
Postfach 10 22 41
D-50462 Köln (DE)



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

1. Field of the Invention

The present invention relates to a liquid foliar glazing agent for ornamental foliage plants etc.

2. Description of the Prior Art

Prior art methods for foliar glazing include the method disclosed in Japanese Patent Publication Open to Public Inspection No. 215610/1988, in which a vegetable oil is emulsified and dispersed in an algal extract, then formulated with a food grade organic acid so as to obtain a lustering effect, a glazing effect, a freshness-retaining effect and other effects in fruit, ornamental foliage plants etc., as well as to control pests and disease in plants, to increase specific gravity of saccharides in fruit and to increase freshness retention time in food.

However, the prior art method described above may not provide the desired gloss in some kinds of plants, since its primary aim is not to obtain a foliar glazing effect. In addition, cultivated plants are generally subject to frequent watering, so a sufficient glazing effect is retained only for a short period after application, i.e., glaze loss becomes considerable in 1 month due to the significant run-off of the glazing ingredient.

Also, the resulting coating on leaves is liable to catch dust, which may suddenly impart a dirty appearance.

The technical object of the present invention is to provide a foliar glazing agent capable of improving foliar gloss and its retention, and preventing dust adhesion.

The present inventors made investigations taking note of the ethylene-α-olefin co-oligomer used as an antidrift additive for agrichemical active ingredients as disclosed in Japanese Patent Publication Open to Public Inspection No. 45203/1988, and found that this substance can serve as a foliar glazing agent capable of solving the aforementioned problems. The present inventors made further investigations based on this finding, and developed the present invention.

SUMMARY OF THE INVENTION

The present invention is a liquid foliar glazing agent comprising an ethylene-α-olefin co-oligomer.

More concretely, the foliar glazing agent of the present invention essentially comprises 1) an ethylene-α-olefin co-oligomer, and if desired additionally 2) an emulsifier, or 3) a defoaming agent. More specifically, the foliar glazing agent of the present invention may contain as desired 4) a fungicide, 5) an insecticide, 6) a miticide, 7) a fertilizer component, 8) a trace element, 9) an activator and other components which can be used for plant cultivation, in addition to the above-mentioned components 1) through 3). Still other components such as 10) a preservative antifungal agent, 11) a flavor and 12) a pigment or dye may be contained as desired.

A compound represented by the following Formula (I) can serve well as an ethylene-α-olefin co-oligomer.

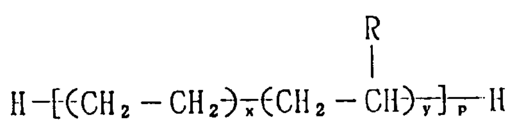

(I)

wherein R represents $C_nH_{2n+1}$; x represents an integer of 1 through 10; y represents an integer of 1 through 10; p represents an integer of 5 through 80; n represents an integer of 1, 2 or 3.

Among the compounds represented by Formula (I) above, preference is given to those having a structure meeting the requirements of n = 1, x = y = 1 and p = 10 through 60.

Examples of compounds which can serve well include Lucant HC-10, HC-20, HC-40, HC-100, HC-150, HC-600 and HC-2000 (registered trademark, all produced by Mitsui Petrochemical Industries, Ltd.).

The foliar glazing agent of the present invention is easily produced by dispersing the co-oligomer described above and if desired one or more of the above optional ingredients (2) to (12) usually in an appropriate solvent (e.g. water).

Although the proportion of co-oligomer described above cannot be generally specified, it is normally about 0.2 to 20.0 parts (preferably 0.5 to 10.0 parts) to 100 parts by weight [hereinafter "part(s) by weight" is simply referred to as "part(s)"] of the total quantity of the foliar glazing agent of the present invention.

Any emulsifier can be used, as long as it is capable of dispersing the co-oligomer described above in water.

Particularly cationic surfactants, anionic surfactants and nonionic surfactants can be suitably used. But anionic surfactants and nonionic surfactants are more preferable. Examples of cationic surfactants include

lauryltrimethylammoniumchloride, cetyltrimethylammoniumchloride, stearyltrimethylammoniumchloride, dilauryldimethylammoniumchloride, distearyldimethylammoniumchloride, lauryldihydroxyethylmethylammoniumchloride, oleylbispolyoxyethylenemethylammoniumchloride, stearylhydroxyethyldimethylammoniumchloride, lauryldimethylbenzylammoniumchloride, laurylaminopropyldimethylethylammoniumsulfate and laurylaminopropyldimethylhydroxyethylammoniumperchlorate.

Examples of anionic surfactants include polyoxyethylene nonylphenyl ether sulfate ammonium salt, polyoxyethylene dinonylphenyl ether sulfate ammonium salt, polyoxyethylene distyrenated phenyl ether sulfate ammonium salt and polyoxyethylene synthetic alcohol sulfate ammonium salt. As specific commercial names thereof, mention may be made of RY-321, 335, 333 and 334, all produced by Matsumoto Yushi-Seiyaku Co., Ltd.

Examples of nonionic surfactants include polyoxyethylene nonylphenyl ether, polyoxyethylene bisalkylphenyl ether, polyoxyethylene styrenated phenyl ether, polyoxyethylene oleyl ether, polyoxyethylene castor oil and polyoxyethylene glycol oleate. As specific commercial names thereof, mention may be made of Penerol NP-2, Penerol BNP-20, Penerol SP-18, Actinol OL-6, Actinol CS-10 and Brian O-200, all produced by Matsumoto Yushi-Seiyaku Co., Ltd. and biodegradationable surface active agent such as Sylvan T-20, Sylvan T-60, Sylvan T-80, Hymal F-3, Hymal F-5, Hymal F-7, Hymal F-9 can be listed, all produced by Matsumoto Yushi-Seiyaku Co., Ltd. But a biodegradable surface active agent is preferable.

Although the proportion of emulsifier used cannot be generally specified, it is normally about 0.05 to 5.0 parts (preferably 0.2 to 2.0 parts) to 100 parts of the total quantity of the foliar glazing agent of the present invention.

It is preferable that the defoaming agent be a defoaming silicone compound prepared in the emulsion type. Examples of such defoaming agents include TSA-730, TSA-732, TSA-731, TSA-770, TSA-772, TSA-7341 and TSA-6523 (all produced by Toshiba Silicone Co., Ltd.).

Although the proportion of defoaming agent used cannot be generally specified, it is normally about 0.05 to 5.0 parts (preferably about 0.1 to 2.0 parts) to 100 parts of the total quantity of the foliar glazing agent of the present invention.

The fungicides benomyl, triforine, TPN, maneb, streptomycin or the like are listed as examples of the fungicide.

The insecticides acephate, permethrin, MEP, malathion, pyrethrin, resmethrin or the like are listed as examples of the insecticide.

The miticides kelthan, fenbutatin oxide, hexythiozox, clofentezine or the like are listed as examples of the miticide.

Although it is impossible to generally specify the amount of each of the fungicide, insecticide and miticide used, it is normally 0.01 parts to 1.0 parts to 100 parts of the total quantity of the foliar glazing agent of the present invention.

Examples of fertilizer components include nitrogen, phosphorus and potassium fertilizers such as urea, ammonium sulfate, ammonium nitrate, diammonium phosphate, monoammonium phosphate, potassium nitrate, dipotassium phosphate, monopotassium phosphate and potassium hydroxide.

Although the amount of the fertilizer components used cannot be generally specified, it is normally 0.006 to 0.1 part to a total quantity of 100 parts of the foliar glazing agent of the present invention.

Examples of preferable trace elements include compounds containing an inorganic metal ion known to be essential to plant growth such as magnesium sulfate, manganese sulfate, boric acid, EDTA-Fe, EDTA-Mg, copper sulfate, zinc sulfate and ammonium molybdate.

Although the amount of the trace elements used cannot be generally specified, it is normally 0.001 to 0.015 part to a total quantity of 100 parts of the foliar glazing agent of the present invention.

Examples of activators include vitamin $B_1$, vitamin $B_6$, nicotinamide, choline chloride, gibberellin, benzyladenine, iron chloride and EDTA-Fe.

Although the amount of the activators used cannot be generally specified, it is normally 0.005 to 0.05 part to a total quantity of 100 parts of the foliar glazing agent of the present invention.

Any preservative antifungal agent can be used, as long as it protects the components of the foliar glazing agent of the present invention. It is preferable that they be not significantly toxic to animals and plants. Examples of such preservative antifungal agents which may be formulated in the foliar glazing agent of the present invention include Coatcide D®, Coatcide SP® and Coatcide 55D®, all of which contain as an effective ingredient methyl 2-benzimidazole carbamate (MBC) (all produced by Takeda Chemical Industries, Ltd.) and thiazole derivatives SLAOFF 620® and SLAOFF 72N® (both produced by Takeda Chemical Industries, Ltd.).

Although the amount of the preservative antifungal agents used cannot be generally specified, it is normally 0.01 to 1.0 part to a total quantity of 100 parts of the foliar glazing agent of the present invention.

Any of natural flavors collected from plants and synthetic flavors such as alcohols, aldehydes, ketones,

esters and phenol ethers can be used.

Although the amount of the flavors used cannot be generally specified, it is normally 0.01 to 3.0 parts to a total quantity of 100 parts of the foliar glazing agent of the present invention.

Any ordinary pigment, whether organic or inorganic, can be used, and any color is acceptable, including blue, green, yellow, orange, red and white. Examples of pigments which can serve well include copper phthalocyanine blue for blue color, copper phthalocyanine green for green color, bisazo pigments for yellow color, insoluble monoazo pigments for orange color, insoluble monoazo pigments for red color and condensation azo pigments, quinacridone pigments and azo pigments.

Any dye can be used, including natural dyes such as carotinoids, porphyrins and chlorophylls and synthetic dyes such as tar dyes.

Although it is impossible to generally specify the amount of use of these pigments and dyes, they are normally used in a ratio of 0.01 to 3.0 parts, preferably 0.1 to 1.0 parts to a total quantity of 100 parts of the foliar glazing agent of the present invention.

Concerning the production method for the foliar glazing agent of the present invention, the foliar glazing agent of the present invention is easily produced by dispersing in water and/or a propellant the component 1) described above normally alone and, if desired, in combination with one or more of the components 2) through 12) described above. The ratios of these components used are specified above as relative to the total quantity of the foliar glazing agent of the present invention produced as above.

It is preferable to use the foliar glazing agent of the present invention in an aerosol form, which can be obtained by mixing the necessary components described above, dispensing the mixture into containers, and then packing an appropriate propellant [preferably LPG (liquefied petroleum gas)] therein.

Note that the foliar glazing agent of the present invention may also be produced by mixing the component 1) described above and one or more of the components 2) through 12) as desired by a standard method. In this case, it is normally preferable to dilute the foliar glazing agent of the present invention with water before application and apply it over leaf surfaces.

The leaves or foliar surface of plants, preferably ornamental foliage plants, are contacted with the thus prepared agent of the present invention usually by spraying the agent.

Although the application amount of the foliar glazing agent of the present invention cannot be generally specified, the desired effect can be obtained with an amount such that the foliar surface is sufficiently wetted.

The present inventors also found that the foliar glazing agent of the present invention possesses insecticidal and fungicidal activities. The foliar glazing agent of the present invention, even when it is free of insecticidal, fungicidal and miticidal components, is effective on scales, cabbage worms, mites, lice, aphids, and pathogenic fungi causative of powdery mildew, rust, sooty mold and other diseases. Particularly, it is an unexpected finding that the foliar glazing agent of the present invention is effective on scales, on which ordinary agrochemicals are usually effectless.

The insecticidal or fungicidal action mechanism of the foliar glazing agent of the present invention remains unclarified.

## Examples

The present invention is hereinafter described in more detail using the following examples.

All quantities for formulation amount, expressed in part(s) by weight, are simply referred to as "part(s)" in the Examples.

### Example 1

Lucant HC-40 2.5 parts
Polyoxyethylene sorbitol monooleate 0.2 parts
Polyoxyethylene nonyl phenyl ether 0.1 part
Polyoxyethylene monolaurate 0.2 parts
Polyoxyethylene sorbitol monolaurate 0.2 parts
TSA-732 0.5 parts
Water 96.3 parts

These substances were mixed uniformly using an emulsifying device, such as the TK Homomixer (produced by Tokushu Kika Kogyo K.K.), to yield a foliar glazing agent.

Example 2

Lucant HC-20 3.5 parts
Polyoxyethylene sorbitol monostearate 0.2 parts
Polyoxyethylene nonyl phenyl ether 0.1 part
Polyoxyethylene monolaurate 0.2 parts
Polyoxyethylene sorbitol monolaurate 0.2 parts
TSA-730 0.7 parts
Water 95.1 parts

These substances were mixed and dissolved using a propeller agitator, and 95.1 parts of water was added, followed by uniform mixing in a TK homomixer. The resulting mixture was dispensed to aerosol cans, which were then filled with 100 parts of LPG (liquefied petroleum gas), to yield an aerosol type foliar glazing agent.

Example 3

Lucant HC-20 3.5 parts
Polyoxyethylene sorbitol tetraoleate 0.2 parts
Polyoxyethylene nonyl phenyl ether 0.1 part
Polyoxyethylene monolaurate 0.2 parts
Polyoxyethylene sorbitol monolaurate 0.2 parts
TSA-732 0.7 parts
Water 95.1 parts

These substances were mixed uniformly and then combined with LPG as a propellant in the same manner as in Example 2 to yield an aerosol type foliar glazing agent.

Example 4

Lucant HC-40 3.0 parts
Polyoxyethylene sorbitol tetraoleate 0.25 parts
Polyoxyethylene nonyl phenyl ether 0.1 part
Polyoxyethylene monolaurate 0.2 parts
Polyoxyethylene sorbitol monolaurate 0.2 parts
TSA-732 0.8 parts
Water 95.45 parts

These substances were mixed uniformly and then combined with LPG as a propellant in the same manner as in Example 2 to yield an aerosol type foliar glazing agent.

Example 5

Lucant HC-10 4.0 parts
Polyoxyethylene sorbitol tetraoleate 0.2 parts
Polyoxyethylene nonyl phenyl ether 0.1 part
Polyoxyethylene monolaurate 0.2 parts
Polyoxyethylene sorbitol monolaurate 0.2 parts
TSA-730 0.7 parts
Water 94.6 parts

These substances were mixed uniformly and then combined with LPG as a propellant in the same manner as in Example 2 to yield an aerosol type foliar glazing agent.

Example 6

Lucant HC-10 5.0 parts
Polyoxyethylene sorbitol monolaurate 0.1 part
Polyoxyethylene nonyl phenyl ether 0.1 part
Polyoxyethylene monostearate 0.3 parts
Polyoxyethylene sorbitol monooleate 0.2 parts
TSA-7341 0.4 parts
Water 93.9 parts

These substances were mixed uniformly in the same manner as in Example 1 to yield an aerosol type foliar glazing agent.

Example 7

Lucant HC-10 6.0 parts
Polyoxyethylene sorbitol monooleate 0.3 parts
Polyoxyethylene nonyl phenyl ether 0.1 part
Polyoxyethylene monolaurate 0.1 part
Polyoxyethylene sorbitol monolaurate 0.2 parts
TSA-6523 0.5 parts
Water 92.8 parts

These substances were mixed uniformly in the same manner as in Example 1 to yield an aerosol type foliar glazing agent.

Example 8

Lucant HC-10 5.0 parts
Polyoxyethylene sorbitol monooleate 0.3 parts
Polyoxyethylene nonyl phenyl ether 0.1 part
Polyoxyethylene monolaurate 0.1 part
Ethylene glycol 2.0 parts
TSA-730 0.5 parts
Water 92.0 parts

These substances were mixed uniformly in the same manner as in Example 1 to yield an aerosol type foliar glazing agent.

Example 9

Lucant HC-10 6.0 parts
Polyoxyethylene sorbitol monooleate 0.2 parts
Polyoxyethylene nonyl phenyl ether 0.1 part
Polyoxyethylene monolaurate 0.2 parts
Polyoxyethylene sorbitol monolaurate 0.2 parts
Glycerol 2.0 parts
TSA-732 0.7 parts
Water 90.6 parts

These substances were mixed uniformly in the same manner as in Example 1 to yield an aerosol type foliar glazing agent.

Example 10

Lucant HC-10 4.0 parts
Polyoxyethylene sorbitol monooleate 0.3 parts
Polyoxyethylene nonyl phenyl ether 0.1 part
Polyoxyethylene monolaurate 0.1 part
Ethylene glycol 2.0 parts
Water 93.5 parts

These substances were mixed uniformly in the same manner as in Example 1 to yield an aerosol type foliar glazing agent.

Example 11

Lucant HC-10 3.5 parts
Poiyoxyethylene nonyl phenyl ether 0.1 part
Polyoxyethylene monolaurate 0.2 parts
Polyoxyethylene sorbitol monostearate 0.2 parts
Polyoxyethylene sorbitol monolaurate 0.2 parts

Diglycerol 2.0 parts
Water 93.8 parts

These substances were mixed uniformly in the same manner as in Example 1 to yield an aerosol type foliar glazing agent.

Example 12

- Lucant HC-10 4.0 parts
- Polyoxyethylene nonyl phenyl ether 0.45 parts
- Polyoxyethylene stearate 0.15 parts
- Polyoxyethylene sorbitol monolaurate 0.30 parts
- SLAOFF 620 (produced by Takeda Chemical Industries) 0.02 parts
- Water 95.08 parts

These substances were mixed uniformly in the same manner as in Example 1 to yield an aerosol type foliar glazing agent.

Example 13

- Lucant HC-10 3.5 parts
- A-5202 0.5 parts
- LEM-308 1.0 part
- Polyoxyethylene nonyl phenyl ether 0.30 parts
- Polyoxyethylene stearate 0.40 parts
- Polyoxyethylene sorbitol monolaurate 0.50 parts
- SLAOFF 620 0.010 part
- Water 93.79 parts

These substances were mixed uniformly in the same manner as in Example 1 to yield an aerosol type foliar glazing agent.

[Test Example 1]

The preparations obtained in Examples 1 through 13 above and the prior art additive described above were each applied by a standard method to dirty leaves of three kinds of ornamental foliar plants, namely *Clivia miniata*, rubber plant and Peperonia (by direct spraying for the aerosol type or by means of a sprayer for the non-aerosol type). The foliar glazing effects and dust adhesion-suppressing effects of the samples were compared in two cases: 1) 1 day after application, and 2) 30 days after application, during which period watering was repeated every 10 days.

The above-mentioned prior art sample was prepared by 10-fold dilution of the additive disclosed in Example 1 of the corresponding specification as an original solution.

The results are shown in Table 1.

Table 1

| Sample | *Clivia miniata* | | Rubber plant | | Peperonia | |
|---|---|---|---|---|---|---|
| | Immediately after application | 30 days after applicatii | Immediately after application | 30 days after applicatii | Immediately after application | 30 days after applicatii |
| Example 1 | 5 | 4 | 5 | 5 | 5 | 4 |
| Example 2 | 5 | 5 | 5 | 5 | 5 | 4 |
| Example 3 | 5 | 4 | 5 | 5 | 5 | 5 |
| Example 4 | 5 | 5 | 5 | 5 | 5 | 4 |
| Example 5 | 5 | 5 | 5 | 5 | 5 | 5 |
| Example 6 | 5 | 4 | 5 | 5 | 5 | 5 |
| Example 7 | 5 | 4 | 5 | 5 | 5 | 4 |
| Example 8 | 5 | 5 | 5 | 5 | 5 | 5 |
| Example 9 | 5 | 5 | 5 | 4 | 5 | 5 |
| Example 10 | 5 | 4 | 5 | 5 | 5 | 4 |
| Example 11 | 5 | 4 | 5 | 4 | 5 | 5 |
| Example 12 | 5 | 4 | 5 | 5 | 5 | 4 |
| Example 13 | 5 | 5 | 5 | 5 | 5 | 4 |
| Prior art | 5 | 2 | 3 | 1 | 4 | 1 |
| Untreated control | 3 | 2 | 3 | 2 | 3 | 1 |

5: Marked foliar glazing effect, with no dust adhesion.
4: Good foliar glazing effect, with no dust adhesion.
3: No foliar glazing effect, with little dust adhesion.
2: No foliar glazing effect, with moderate dust adhesion.
1: No foliar glazing effect, with considerable dust adhesion.

As is evident from the table, when using the prior art, the glazing property was not retained and considerable dust adhesion occurred in all the three kinds of ornamental foliar plants 30 days after application, though a good glazing effect was obtained in *Clivia miniata* and Peperonia initially.

In contrast, the preparations obtained in accordance with the present invention, in Examples above, showed excellent initial glazing property; in addition, a satisfactory glaze was well retained even 30 days after application, with dust re-adhesion suppressed due to foliar surface smoothing.

[Test Example 2]

The foliar glazing agent of the present invention was spread over adult mealybugs parasitizing on kapocks (ornamental foliage plant) for about 5 seconds, and the adults which survived were counted 15 days after application.

The results are shown in Table 2.

Table 2

| Sample | Number of surviving adults per 5 plants | |
|---|---|---|
| | Before application | 15 days after application |
| Example 1 | 216 | 0 |
| Example 2 | 187 | 3 |
| Example 3 | 194 | 2 |
| Example 5 | 234 | 0 |
| Example 6 | 216 | 11 |
| Example 7 | 229 | 23 |
| Example 8 | 186 | 0 |
| Example 9 | 180 | 1 |
| Example 12 | 215 | 0 |
| Example 13 | 233 | 4 |
| Not applied | 184 | 217 |
| Not applied | 237 | 259 |

[Test Example 3]

Adult brown-winged green bugs parasitizing on persimmon trees were captured. The foliar glazing agent of the present invention was spread directly over them for 2 to 3 seconds, and the adults which survived were counted 5, 10 and 30 minutes alter application.

The results are shown in Table 3.

Table 3

| Sample | Number of surviving adult brown-winged green bugs | | | |
|---|---|---|---|---|
| | Before application | 5 minutes after application | 10 minutes after application | 30 minutes after application |
| Example 1 | 100 | 15 | 3 | 0 |
| Example 2 | 100 | 13 | 2 | 0 |
| Example 3 | 100 | 17 | 4 | 1 |
| Example 5 | 100 | 10 | 0 | 0 |
| Example 6 | 100 | 12 | 3 | 1 |
| Example 7 | 100 | 7 | 0 | 0 |
| Example 9 | 100 | 13 | 0 | 0 |
| Example 12 | 100 | 2 | 5 | 1 |
| Example 13 | 100 | 7 | 0 | 0 |
| Not applied | 100 | 100 | 100 | 100 |
| Not applied | 100 | 100 | 100 | 100 |

[Test Example 4]

The foliar glazing agent of the present invention was spread over female adult carmine spider mites parasitizing on roses (variety: Santa Monica) grown in a glass room (20 to 25°C) for 2 to 3 seconds, and the female adults which survived were counted.

The results are shown in Table 4.

Table 4

| Sample | Number of surviving female adults per 100 leaves | | | |
|---|---|---|---|---|
| | Before application | 1 day after application | 3 days after application | 7 days after application |
| Example 1 | 127 | 9 | 0 | 2 |
| Example 5 | 112 | 6 | 3 | 7 |
| Example 9 | 135 | 5 | 3 | 0 |
| Example 12 | 130 | 7 | 0 | 0 |
| Example 13 | 111 | 10 | 0 | 4 |
| Not applied | 105 | 134 | 151 | 163 |
| Not applied | 124 | 151 | 167 | 160 |

[Test Example 5]

The foliar glazing agent of the present invention was spread over roses (variety: Peace) grown in a glass room (20 to 25°C) for 2 to 3 seconds, and the leaves were examined for the incidence ratio of powdery mildew.

The results are shown in Table 5.

Table 5

| Sample | Ratio of affected leaves (%) | | |
|---|---|---|---|
| | Before application | 10 days after application | 20 days after application |
| Example 1 | 18.4 | 3.5 | 1.4 |
| Example 5 | 19.5 | 7.0 | 1.0 |
| Example 9 | 20.5 | 4.2 | 0.7 |
| Example 12 | 15.0 | 9.3 | 0.9 |
| Example 13 | 13.7 | 2.1 | 4.2 |
| Not applied | 15.9 | 38.8 | 62.4 |
| Not applied | 12.0 | 41.5 | 57.7 |

[Test Example 6]

The foliar glazing agent of the present invention was spread over camellias grown outdoors for 2 to 3 seconds, and the leaves were examined for the incidence ratio of sooty mold.

The results are shown in Table 6.

Table 6

| Sample | Number of affected leaves per 100 leaves | | |
|---|---|---|---|
| | Before application | 30 days after application | 60 days after application |
| Example 1 | 7 | 7 | 8 |
| Example 2 | 8 | 9 | 10 |
| Example 3 | 5 | 4 | 7 |
| Example 5 | 6 | 7 | 7 |
| Example 6 | 7 | 10 | 12 |
| Example 9 | 7 | 12 | 9 |
| Example 12 | 8 | 15 | 13 |
| Example 13 | 9 | 9 | 11 |
| Not applied | 11 | 21 | 45 |
| Not applied | 7 | 27 | 36 |

Effects of the invention

As evidenced by the experimental results presented above, the present invention provides the following effects ① through ⑥.

① Provides excellent glaze for leaves to which it is applied.

② Offers an excellent glaze-retention property for leaves to which it is applied.

③ The coat formed on leaves is not liable to dust adhesion.

④ Foliar cleaning is simultaneously achieved by the detergency of the emulsifier.

⑤ Foaming caused by the emulsifier is quickly eliminated by the defoaming agent to smooth the coating formed on leaves, thus preventing foliar glaze reduction.

⑥ The foliar glazing agent of the present invention possesses insecticidal and fungicidal activities.

**Claims**

1. A liquid foliar glazing agent comprising an ethylene-α-olefin co-oligomer.

2. A liquid foliar glazing agent as claimed in claim 1 wherein said co-oligomer is dispersed in water by means of an emulsifier.

3. A liquid foliar glazing agent as claimed in claim 2 characterized by that the agent further contains a defoaming agent.

4. Use of an ethylene-α-olefin co-oligomer for the preparation of a foliar surface glazing agent as claimed in claim 1.

## Patentansprüche

1. Flüssiges Blattpolitur-Mittel, umfassend ein Ethylen-α-Olefin-Co-Oligomer.

2. Flüssiges Blattpolitur-Mittel nach Anspruch 1, worin das Co-Oligomer mit Hilfe eines Emulgators in Wasser dispergiert ist.

3. Flüssiges Blattpolitur-Mittel nach Anspruch 2, dadurch gekennzeichnet, daß das Mittel weiterhin ein Entschäumungs-Mittel enthält.

4. Verwendung eines Ethylen-α-Olefin-Co-Oligomers zur Herstellung eines Blattpolitur-Mittels nach Anspruch 1.

## Revendications

1. Agent de lustrage pour les feuilles, comprenant un co-oligomère éthylène-α-oléfine.

2. Agent de lustrage pour les feuilles selon la revendication 1, dans lequel ledit co-oligomère est dispersé dans l'eau à l'aide d'un émulsifiant.

3. Agent de lustrage pour les feuilles selon la revendication 2, caractérisé en ce que l'agent contient aussi un agent antimousse.

4. Utilisation d'un co-oligomère éthylène-α-oléfine pour préparer un agent de lustrage pour les feuilles selon la revendication 1.